# EUROPEAN PATENT APPLICATION

(11) **EP 3 812 562 A1**
(43) Date of publication of application: **28.04.2021**
(21) Application number: 20201453.6
(22) Date of filing: 13.10.2020
(51) Int. Cl.: F02C 3/10

(54) **TURBOSHAFT GAS TURBINE ENGINE**

(30) Priority: 23.10.2019 GB 201915308
(71) Applicant: Rolls-Royce plc, London N1 9FX (GB)
(72) Inventor: Stieger, Rory, Derby, Derbyshire DE24 8BJ (GB); Taylor, Mark, Derby, Derbyshire DE24 8BJ (GB)
(74) Representative: Rolls-Royce plc

(57) **Abstract**

A turboshaft gas turbine engine (101) comprises, in fluid flow series, a gas-generator compressor (102), a combustor (103), a gas-generator turbine (104), and a free power turbine (105). The rotational speeds of the turbines (104, 105) are dependent upon an outlet temperature of the combustor (103), and a speed relationship between the turbines (104, 105) is defined as the ratio of rotational speeds of the turbines (104, 105) over a running range of non-dimensional power outputs of the gas turbine engine (101). A first derivative of the speed relationship is from 0.9 to 1.1.

## Description

### TECHNICAL FIELD

This disclosure relates to turboshaft gas turbine engines, in particular those with a single-spool gas-generator and a free power turbine.

### BACKGROUND

Turboshaft-configuration gas turbines are known. Single-spool turboshaft engines comprise a turbine which drives a compressor and the load, whilst in single-spool, free power turbine engines one turbine drives the compressor (forming a *gas-generator* spool) and another drives the load. Most turboshaft engines are designed to drive loads which require a fixed synchronous speed (such as in electrical power generation) or operate according to a cube-law (such as ship propellers).

Such operational constraints on the engine often result in sub-optimal designs, as part load compressor surge margin is eroded due to the fixed output speed. This is particularly the case on the single spool, non-free power turbine arrangement, as the compressor is forced to operate at a constant non-dimensional speed (N/√T) despite a reduction in corrected flow (W√T/P). Whilst in the single-spool, free power turbine configuration there is no mechanical coupling between the load and the gas-generator, there is still an aerodynamic coupling between the turbines and thus compressor operability at part load is still affected to a degree.

It is therefore desirable to permit the free power turbine to vary in rotational speed. It is an object of the present invention to provide an optimal relationship between the rotational speeds of the gas-generator turbine and the free power turbine in a turboshaft engine.

### SUMMARY

The invention therefore provides a turboshaft gas turbine engine comprising, in fluid flow series, a gas-generator compressor, a combustor, a gas-generator turbine, and a free power turbine;
wherein the rotational speeds of the turbines are dependent upon an outlet temperature of the combustor, and a speed relationship between the turbines is defined as the ratio of rotational speeds of the turbines over a running range of non-dimensional power outputs of the gas turbine engine;
wherein a first derivative of the speed relationship is from 0.9 to 1.1.

In an embodiment, the first derivative of the speed relationship is from 0.95 to 1.05.

In an embodiment, the gas-generator turbine is a single-stage turbine and the free power turbine a single stage turbine.

In an embodiment, a ratio of a turbine blade stress parameter (AN²) of the gas-generator turbine to the turbine blade stress parameter of the free power turbine is from 0.7 to 2.3.

In an embodiment, said ratio of the turbine blade stress parameters is from 0.8 to 1.7.

In an embodiment, a ratio of a turbine disc stress parameter (U/√T) of the gas-generator turbine to the turbine disc stress parameter of the free power turbine is from 1 to 1.7.

In an embodiment, said ratio of the turbine disc stress parameters is from 1.3 to 1.4.

In an embodiment, the gas-generator turbine is a single-stage turbine and the free power turbine is a two-stage turbine.

In an embodiment, a ratio of the stress parameter (AN²) of the gas-generator turbine to the stress parameter of the second stage of the free power turbine is from 0.54 to 1.4.

In an embodiment, a ratio of the stress parameter (AN²) of the gas-generator turbine to the stress parameter of the second stage of the free power turbine is from 0.62 to 1.

In an embodiment, a ratio of a turbine disc stress parameter (U/√T) of the gas-generator turbine to the turbine disc stress parameter of the second stage of the free power turbine is from 0.92 to 1.5.

In an embodiment, said ratio of a turbine disc stress parameters is from 1.1 to 1.22.

In an embodiment, the gas-generator turbine comprises a stator having from 14 to 30 nozzle guide vanes.

In an embodiment, the gas-generator turbine comprises a rotor having from 30 to 60 turbine blades.

In an embodiment, a ratio of the number of nozzle guide vanes in the stator to the number of turbine blades in the rotor is from 0.23 to 1.

In an embodiment, the gas-generator turbine and the free power turbine are arranged to contra-rotate.

### BRIEF DESCRIPTION OF THE DRAWINGS

Embodiments will now be described by way of example only with reference to the accompanying drawings, which are purely schematic and not to scale, and in which:
Figure 1 is a block diagram illustrating an embodiment of a turboshaft gas turbine engine;
Figure 2 is a general arrangement of the engine of Figure 1 with a single stage free power turbine;
Figure 3 shows the turbine arrangement of the engine of Figure 1 with the single stage free power turbine;
Figure 4 is a general arrangement of the engine of Figure 1 with a two stage free power turbine;
Figure 5 shows the turbine arrangement of the engine of Figure 1 with the two stage free power turbine;
Figure 6 is a chart showing turbine speeds with respect to combustor outlet temperature (T₄);
Figure 7 is a chart showing turbine speeds with respect to free power turbine shaft non-dimensional power output; and
Figure 8 is a chart showing free power turbine speed with respect to gas-generator speed.

### DETAILED DESCRIPTION

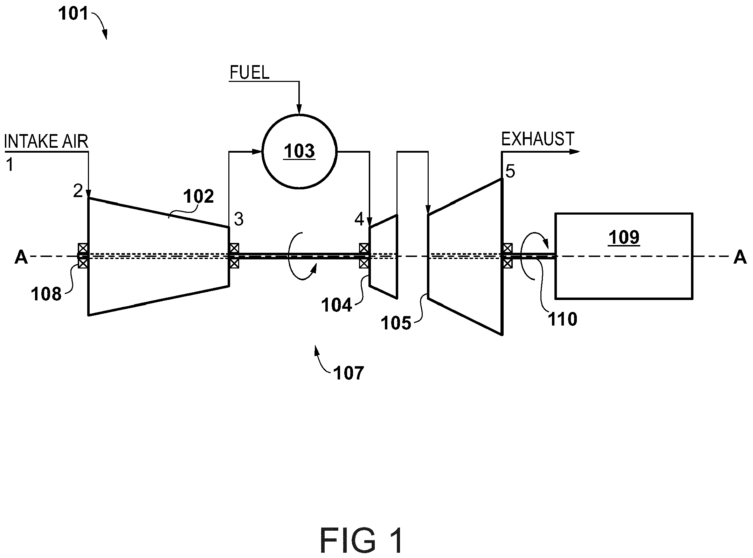

A block diagram illustrating an embodiment of a turboshaft gas turbine engine is shown in Figure 1.

In Figure 1, station numbering according to ARP 755A are provided. The engine, identified generally by numeral 101, comprises in fluid flow series a gas-generator compressor 102, a combustor 103, a gas-generator turbine 104, and a free power turbine 105. The gas-generator compressor 102 and the gas-generator turbine 104 are mechanically linked so as to rotate in unison around an engine centreline A-A by an interconnecting shaft 106, and together form a gas-generator spool 107. Bearings 108 support the gas-generator spool 107 relative to static structures of the engine 101. The free power turbine 105 is mechanically linked with a load 109 via an output shaft 110.

In operation, intake air is received at station 1 and enters the gas-generator compressor 102 at station 2. The air is compressed by the gas-generator compressor 102, and exits therefrom at station 3 where it is supplied to the combustor 103, mixed with fuel and ignited. The hot combustion products leave the combustor 103 at station 4 and are expanded through the gas-generator turbine 104, causing it to rotate and drive the compressor 102. At this point the flow exiting the gas-generator turbine 104 still comprises a significant amount of enthalpy, which develops work in the free power turbine 105, thereby driving the load 109.

In the present embodiment, the free power turbine 105 is configured to rotate around the engine centreline A-A. It will be appreciated that in alternative embodiments the free power turbine 105 may be located on an axis different from the engine centreline A-A.

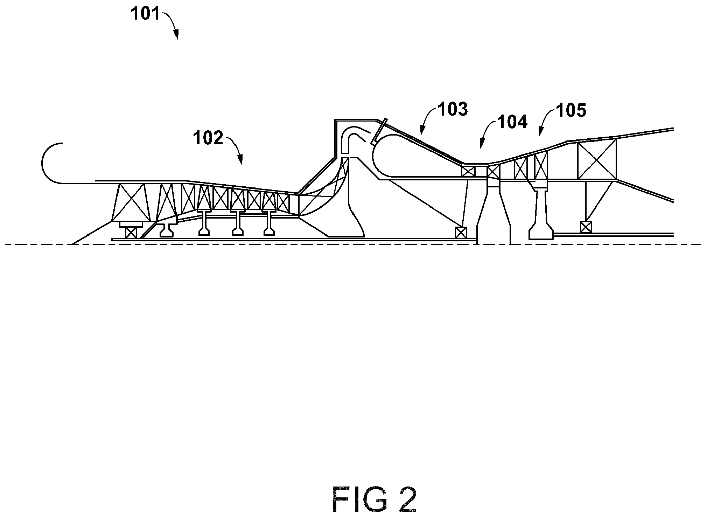

In the present embodiment, the free power turbine 105 is configured to rotate in the opposite direction to the gas-generator turbine 104, i.e. they are arranged to contra-rotate. As will be described further with reference to Figures 2 onward, this may reduce the amount of flow turning required between the turbine stages. However in alternative embodiments the free power turbine 105 may instead be configured to co-rotate with the gas-generator turbine 104.

In the present embodiment, the load 109 is a variable-speed load. For example, the load may be a load compressor for supplying compressed air, or the load may be a variable-frequency electrical generator, or any other variable-speed load or combinations thereof. It is contemplated that the engine 101 may be particularly well suited as an auxiliary power unit for an aircraft, in which it is tasked with providing compressed air for the cabin and electrical power for services on the aircraft.

In the configuration shown in Figure 1, the gas-generator spool 107 and the combination of the free power turbine 105 and the load 109 are both able to vary in speed. In this way, fuel consumption and emissions may be reduced.

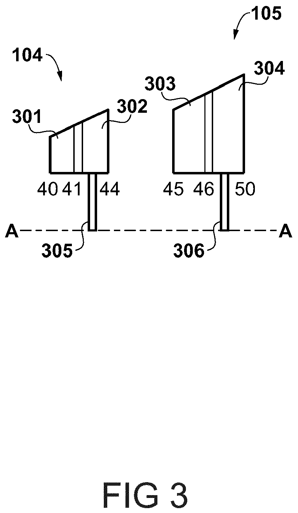

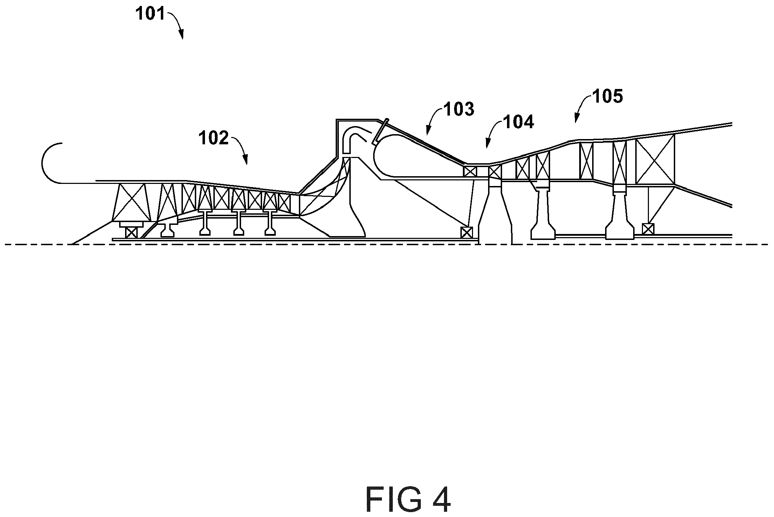

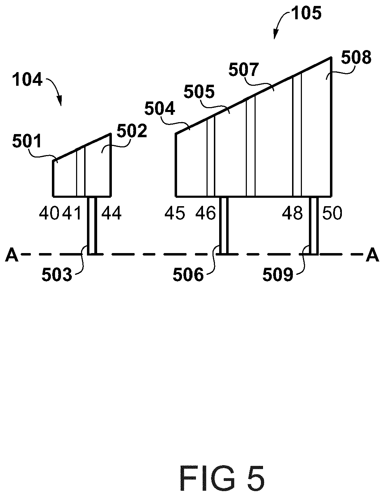

An embodiment the engine 101 with a single stage free power turbine will be described with reference to Figures 2 and 3. An embodiment the engine 101 with a two-stage free power turbine will be described with reference to Figures 4 and 5.

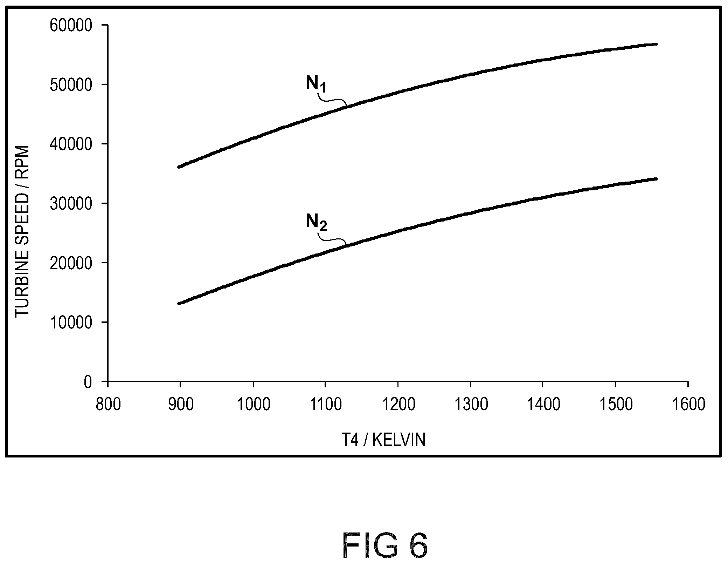

The speed relationship between the gas-generator turbine 104 and the free power turbine 105 will be described with reference to Figures 6 to 8.

A general arrangement of a first embodiment of the engine 101 is shown in Figure 2. For clarity, only the half of the engine above the centreline A-A is shown.

In the embodiment of Figure 2 the compressor 102 is an axial-centrifugal compressor, and thus comprises a number of axial compression stages upstream of a final centrifugal stage. In this way, high pressure ratios may be achieved on the single gas-generator spool 107 without the attendant complexity and losses associated with ducting between two centrifugal stages. In the present embodiment, the design point pressure ratio of the compressor 102 is from 12 to 16. As used herein, the term "design point" for the engine 101 is the maximum rated power operating condition at International Standard Atmosphere sea level static conditions.

Referring now to Figure 3, which is a diagram showing the turbine arrangement of the engine 101, in the present embodiment the gas-generator turbine 104 is a single stage turbine, as is the free power turbine 105. Station numbers are provided in the Figure identifying the combustor exit 40, the stator outlet 41, the gas-generator rotor outlet 44, the free power turbine stator inlet 45, the free power turbine stator outlet 46, and the free power turbine exit 50.

In the present embodiment, the gas-generator turbine 104 is a high-work single stage turbine.

In an embodiment, the nozzle guide vanes 301 of the gas-generator turbine 104 are configured to have supersonic flow therethrough, whilst the blades 302 on the rotor are configured to have subsonic flow therethrough, thereby giving a degree of reaction less than 0.5, in particular from around 0.15 to 0.4, for example 0.3. This configuration results in a specific work of around from 200 to 290 kilojoules per kilogram, for example 260 kilojoules per kilogram, which is suitable for a lower pressure ratio design compressor, i.e. about 10 to 14.

In another embodiment, both the nozzle guide vanes 301 and the rotor blades 302 of the gas-generator turbine 104 are configured to have supersonic flow therethrough, thereby giving a degree of reaction of from around 0.4 to 0.55, for example 0.47. This configuration results in a specific work of from around 290 to 650 kilojoules per kilogram, for example 320 kilojoules per kilogram, which is suitable for a higher pressure ratio design compressor, i.e. about 14 to 16.

In an embodiment, the gas-generator turbine 104 comprises from 14 to 30 nozzle guide vanes 301. In an embodiment, the rotor of the gas-generator turbine 104 comprises from 30 to 60 blades 302. In an embodiment, the ratio of the number of nozzle guide vanes 301 to the number of blades 302 on the rotor is from 30 to 60. This provides a highly efficient gas-generator turbine stage. In a specific example, 20 nozzle guide vanes and 45 blades are provided, giving a ratio therebetween on 0.44.

As described previously, in the present embodiment the free power turbine 105 is also a single stage turbine, however is configured with a lower specific work and subsonic flow.

As described previously, in the present embodiment the turbines are configured to contra-rotate; this is due to the high degree of exit swirl in the flow exiting the gas-generator turbine, and therefore relaxes the degree of flow turning required by the free power turbine nozzle guide vanes 303, and does not necessitate a further inter-stage vane.

The rotational speeds in revolutions per minute N of the gas-generator turbine 104 and the free power turbine 105 (N₁ and N₂ respectively) in combination with the annulus areas A at their rotor exit stations 44 and 50 (A₄₄ and A₅₀ respectively) together define a blade stress parameter according the formula AN². Thus the blade stress parameter of the gas-generator turbine 104 may be found by evaluating A₄₄N₁², and the blade stress parameter of the gas-generator turbine 105 may be found by evaluating A₅₀N₂².

In the present embodiment, the respective blade stress parameters of the two single-stage turbines, A₄₄N₁² and A₅₀N₂², are related. In an embodiment the ratio of the blade stress parameter of the gas-generator turbine A₄₄N₁² to the blade stress parameter of the free power turbine A₅₀N₂² is from 0.7 to 2.3 which overall provides a highly efficient turbine. In a specific embodiment, the said ratio is from 0.8 to 1.7.

Further, the meanline (i.e. mid-span) blade speed in metres per second U of the gas-generator turbine rotor blades 302 and the free power turbine rotor blades 304 (U₁ and U₂ respectively), in combination with the gas temperatures for each rotor stage (T₄₁ and T₄₆ respectively), together define a disc stress parameter according the formula U/√T, i.e. the corrected meanline blade speed of the respective turbine blades. This measure is indicative of the stress experienced by, respectively, the gas-generator turbine disc 305 and the free power turbine disc 306. The disc stress parameter of the gas-generator turbine 104 may be found by evaluating U₁/√T₄₁, and the disc stress parameter of the gas-generator turbine 105 may be found by evaluating U₂/√T₄₆ - station 46 being the trailing edge of the free power turbine nozzle guide vane 303.

In the present embodiment, the respective disc stress parameters of the two single-stage turbines, U₁/√T₄₁ and U₂/√T₄₆, are related. In an embodiment the ratio of the disc stress parameter of the gas-generator turbine U₁/√T₄₁ to the disc stress parameter of the free power turbine U₂/√T₄₆ is from 1 to 1.7, which overall provides a highly efficient turbine. In a specific embodiment, the said ratio is from 1.3 to 1.4.

A general arrangement of a second embodiment of the engine 101 is shown in Figure 4. Again, for clarity, only the half of the engine above the centreline A-A is shown.

In this embodiment the engine 101 is the same as that illustrated in Figure 2, albeit in this embodiment a two-stage free power turbine 105 is used. Whilst the single-stage turbine is lighter, the two-stage free power turbine does permit a lower loading and thus higher efficiency and potentially a higher maximum power output.

Figure 5 is a similar diagram to Figure 3, and shows the gas-generator turbine 104 and the free power turbine 105 for this second embodiment of the engine 101.

The gas-generator turbine may be configured in a similar manner to that previously described with reference to Figure 3, and thus may adopt any of the features disclosed above.

As with the first embodiment, the gas-generator turbine 104 has nozzle guide vanes 501 and blades 502 on the rotor, supported by a disc 503. In this embodiment the free power turbine 105 is a two-stage turbine, comprising first stage nozzle guide vanes 504, blades 505 on the first stage rotor supported by a first stage disc 506, second stage nozzle guide vanes 507, blades 508 on the second stage rotor supported by a second stage disc 509.

In an embodiment the ratio of the blade stress parameter of the gas-generator turbine A₄₄N₁² to the blade stress parameter of the free power turbine A₅₀N₂² is from 0.54 to 1.4 which overall provides a highly efficient turbine. In a specific embodiment, the said ratio is from 0.62 to 1.

In an embodiment the ratio of the disc stress parameter of the gas-generator turbine U₁/√T₄₁ to the disc stress parameter of the free power turbine U₂/√T₄₈ (station 48 being the trailing edge of the second stage nozzle guide vanes 507) is from 0.92 to 1.5 which overall provides a highly efficient turbine. In a specific embodiment, the said ratio is from 1.1 to 1.22.

A chart showing N₁ and N₂ in revolutions per minute as a function of the combustor outlet temperature T₄ in kelvin is shown in Figure 6. As can be seen, in the engine 101 the rotational speeds of the turbines are both dependent upon an outlet temperature of the combustor.

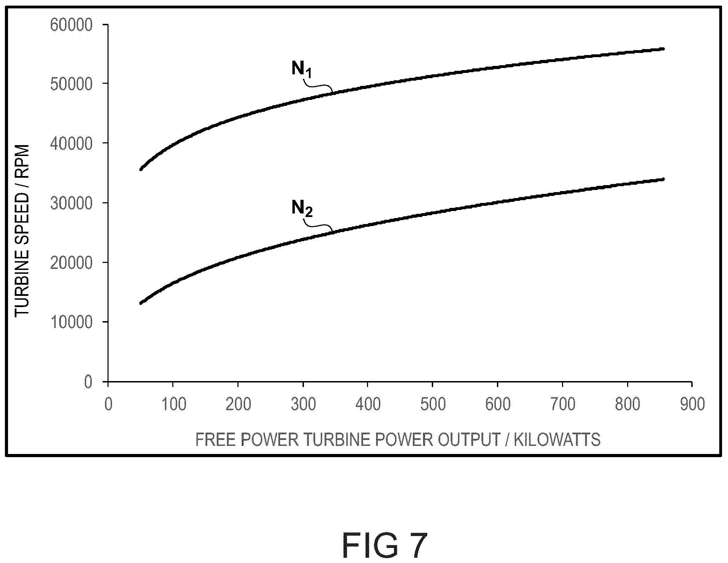

A chart showing N₁ and N₂ in revolutions per minute as a function of the non-dimensional power output in watts of the free power turbine is shown in Figure 7. As can be seen, in the engine 101 the rotational speeds of the turbines both vary in concert with the non-dimensional power output of the free power turbine 105.

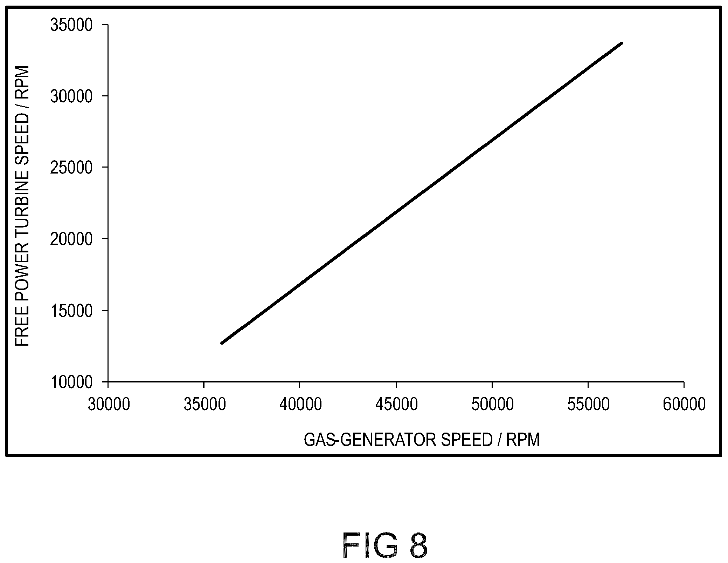

A chart showing N₂ as a function of N₁ is shown in Figure 8. As can be seen, over the range of non-dimensional power outputs of the free power turbine 105, the rotational speeds of the gas-generator turbine 104 and the free power turbine 105 increase monotonically. Indeed, it has been found that maintaining the relationship linear in the manner shown in the chart of Figure 8 provides a highly efficient turbine system. We may therefore define a *speed relationship* between the turbines as the ratio of rotational speeds (N₂ : N₁) of the turbines over a running range of non-dimensional power outputs of the engine 101. As can be seen from the chart of Figure 8, N₂ is a linear function of N₁, and thus the ratio between them is a linear mapping.

It can be shown that optimal efficiency is possible by constraining the relationship between the rotational speeds of the gas-generator turbine 104 and the free power turbine 105 such that the first derivative of the linear function between said speeds lies in a certain range. The inventors have surprisingly found that efficiency is particularly optimal over the range of non-dimensional power outputs of the free power turbine 104 if this first derivative is constrained within the range of from 0.9 to 1.1. Particularly high efficiency is found in the first derivative of the speed lies in the range of from 0.95 to 1.05. In the present implementation, the first derivative is constrained to be 1, resulting in optimal specific fuel consumption from idle to maximum power.

Various examples have been described, each of which feature various combinations of features. It will be appreciated by those skilled in the art that, except where clearly mutually exclusive, any of the features may be employed separately or in combination with any other features and the invention extends to and includes all combinations and subcombinations of one or more features described herein.

## Claims

1. A turboshaft gas turbine engine (101) comprising, in fluid flow series, a gas-generator compressor (102), a combustor (103), a gas-generator turbine (104), and a free power turbine (105);
wherein the rotational speeds of the turbines (104, 105) are dependent upon an outlet temperature of the combustor (103), and a speed relationship between the turbines (104, 105) is defined as the ratio of rotational speeds of the turbines (104, 105) over a running range of non-dimensional power outputs of the gas turbine engine (101);
wherein a first derivative of the speed relationship is from 0.9 to 1.1.

2. The gas turbine engine of claim 1, wherein a first derivative of the speed relationship is from 0.95 to 1.05.

3. The gas turbine engine of claim 1, wherein:
the gas-generator turbine (104) is a single-stage turbine; and
the free power turbine (105) a single stage turbine.

4. The gas turbine engine of claim 3, wherein a ratio of a turbine blade (302) stress parameter (AN²) of the gas-generator turbine (104) to the turbine blade (304) stress parameter of the free power turbine (105) is from 0.7 to 2.3.

5. The gas turbine engine of claim 4, wherein said ratio of the turbine blade (302, 304) stress parameters is from 0.8 to 1.7.

6. The gas turbine engine of claim 3, wherein a ratio of a turbine disc (305) stress parameter (U/√T) of the gas-generator turbine (104) to the turbine disc (306) stress parameter of the free power turbine (105) is from 1 to 1.7.

7. The gas turbine engine of claim 6, wherein said ratio of the turbine disc stress (305m 306) parameters is from 1.3 to 1.4.

8. The gas turbine engine of claim 1, wherein:
the gas-generator turbine (104) is a single-stage turbine; and
the free power turbine (105) is a two-stage turbine.

9. The gas turbine engine of claim 8, in which a ratio of the stress parameter (AN²) of the gas-generator turbine (104) to the stress parameter of the first stage (504, 505) of the free power turbine (105) is from 0.54 to 1.4.

10. The gas turbine engine of claim 8, in which a ratio of the stress parameter (AN²) of the gas-generator turbine (104) to the stress parameter of the second stage (507, 508) of the free power turbine (105) is from 0.62 to 1.

11. The gas turbine engine of claim 8, in which a ratio of a turbine disc (503) stress parameter (U/√T) of the gas-generator turbine (104) to the turbine disc (509) stress parameter of the second stage (507, 508) of the free power turbine (105) is from 0.92 to 1.5.

12. The gas turbine engine of claim 8, in which said ratio of a turbine disc (502, 509) stress parameters is from 1.1 to 1.22.

13. The gas turbine engine of claim 8, in which the gas-generator turbine (104) comprises a stator having from 14 to 30 nozzle guide vanes (501).

14. The gas turbine engine of claim 8, in which the gas-generator turbine (104) comprises a rotor having from 30 to 60 turbine blades (502).

15. The gas turbine engine of claim 8, in which a ratio of the number of nozzle guide vanes (501) in the stator to the number of turbine blades (502) in the rotor is from 0.23 to 1.
